# EUROPEAN PATENT SPECIFICATION

(11) **EP 2 256 643 B1**
(45) Date of publication and mention of the grant of the patent: **07.08.2013**
(21) Application number: 10177139.2
(22) Date of filing: 18.03.2008
(51) Int. Cl.: G06F 17/27

(54) **Handheld electronic device and associated method for improving typing efficiency on the device**
Tragbare elektronische Vorrichtung und entsprechendes Verfahren zur Erhöhung der Tippeffizienz auf der Vorrichtung
Dispositif électronique portable et procédé associé pour améliorer l'efficacité de frappe sur le dispositif

(43) Date of publication of application: 01.12.2010
(62) Divisional of application: 08152911.7
(73) Proprietor: Research In Motion Limited, Waterloo, ON N2L 3W8 (CA)
(72) Inventor: Gao, Dapeng, Waterloo Ontario N2L 3W8 (CA)
(74) Representative: Roberts, Gwilym Vaughan

(56) References cited:
- US-A1- 2007 075 974
- NOKIA: "BEDIENUNGSANLEITUNG NOKIA 7110" BEDIENUNGSANLEITUNG NOKIA 7110, 1 January 2000 (2000-01-01), pages 1-60, XP002256174

## Description

### BACKGROUND

### Field

The disclosed and claimed concept relates generally to handheld electronic devices, and, more particularly, to a method that is executable on a handheld electronic device for improving the typing efficiency through the use of user defined macros to dynamically change the current edit field.

### Description of the Related Art

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Many handheld electronic devices include and provide access to a wide range of integrated applications, including, without limitation, email, telephone, short message service (SMS), multimedia messaging service (MMS), browser, calendar, memo pad and address book applications, such that a user can easily manage information and communications from a single, integrated device. These applications are typically selectively accessible and executable through a user interface that allows a user to easily navigate among these applications.

As is known, when using many of these applications, a user often inputs text using a keyboard provided as part of the handheld electronic device. During the input of text in this manner, many handheld electronic devices employ the following two primary types of input fields for entering and editing text (referred to herein as "edit fields"): normal edit fields and specialized edit fields. When a normal edit field is employed, the text that is input and that appears on the display of the handheld electronic device matches exactly what the user has typed (i.e., one of the characters appearing on each of the keys of the keyboard that is pressed), because the handheld electronic device does not employ any specialized processing to the characters that are input. For example, normal edit fields are used in an email application in the body of an email message and in the memo pad application when a user creates a memo.

On the other hand, specialized edit fields are "smarter" than normal edit fields in the sense that specialized edit fields understand the specific formats of certain inputs and therefore make it easier and faster to input certain text by applying specialized processing to the characters input by the user. In particular, in specialized edit fields, characters that would normally require more time consuming typing on the part of the user to input may instead be input more simply and quickly using a predetermined key selection. For example, when filling out the email address field of a new contact's information in the address book application using a common QWERTY keyboard configuration, instead of typing ALT+P to input the "@" character and ALT+M to get the "." character, if a specialized edit field is being employed a user can simply press a predetermined key, such as the SPACE key, at the appropriate time to get the appropriate character ("@" or "."). For instance, a user could simply type "name" SPACE "domain" SPACE "com" to input "name@domain.com" instead of having to type "name" ALT+P "domain" ALT+M "com" as would be required in a normal edit field. As another example, when entering a new contact's phone number in the address book application, if a specialized edit field is being employed, the characters "wersdfzxc" may be automatically translated to the characters "123456789", which saves the user time since the user would not have to press the ALT key along with the appropriate key each time to get the desired number. In still another example, when entering a URL in the browser application, if a specialized edit field is being employed, "http://www." may be automatically inserted in front of any text that is typed and pressing the SPACE key causes a "." character to be entered (rather than having to press ALT+M), which operations save time. It is understood that the expression "characters" as used herein shall broadly be construed to include letters, digits, symbols and the like and can additionally include ideographic characters, components thereof, other linguistic elements, and the like.

Specialized edit fields as just described are advantageous because they save time, require less key actuation, and typically make typing on handheld electronic devices, which are often small in size, easier. For instance, as demonstrated above, without a specialized edit field, a user will often need to press and hold a particular key, such as the ALT key, with one finger (typically a thumb), while typing with another finger (typically the other thumb). As will be appreciated, having only one finger (e.g., one thumb) available to type with dramatically reduces typing efficiency. Specialized edit fields, on the other hand, leave two fingers (typically both of the user's thumbs) free to type.

As mentioned above, the advantages presented by specialized edit fields are not available in situations where normal edit fields are employed, such as when a user is typing the body of an email or typing a note using the memo pad application. More specially, even though a user can easily type an email address in an address book application employing a specialized edit field by typing "name" SPACE "domain" SPACE "com", in the body of an email or in a memo pad note, the user has to type "name" ALT+P "subdomain" ALT+M "com" to get the same textual input. The latter input method is slower because pressing, for example, the SPACE key with one thumb is quicker than pressing ALT+P or ALT+M with two thumbs. In addition, because seasoned handheld electronic device users are so used to the service provided when typing with specialized edit fields, typing email addresses, phone numbers and URLs and the like in situations where a normal edit field is employed is likely to lead to errors (i.e., a user may forget that the specialized edit field functionality is not available and therefore press incorrect keys).

It would thus be beneficial to be able to take advantage of specialized edit field functionality in situations where normal edit fields are employed.
Nokia: "Bedienungsanleitung Nokia 7110" is a manual of operating instructions for a "Nokia 7110" telephone, US-A-20070075974 discloses a handheld electronic device with a keyboard, thumbwheel, display and associated software optimized for use of the device with the thumbs.
Specialized input helds for e-mail addresses for example and a macrofunctionality that allows a user to specify special character codes in a replacement string that will be treated specially when the replacement string is lateral are also disclosed.
The invention is set out in the claims.

### BRIEF DESCRIPTION OF THE DRAWINGS

A full understanding of the disclosed and claimed concept can be gained from the following Description when read in conjunction with the accompanying drawings in which:

Figure 1 is a front view of an improved handheld electronic device in accordance with the disclosed and claimed concept;

Figure 2 is a block diagram of the handheld electronic device of Figure 1;

Figure 3 is a flowchart illustrating a method of creating a macro on the handheld electronic device of Figures 1 and 2 according to one arrangement of the disclosed and claimed concept;

Figure 4 is a flowchart illustrating a method according to another arrangement of the disclosed and claimed concept by which the handheld electronic device of Figures 1 and 2 enables a user to create a macro;

Figure 5 is a flowchart illustrating a method by which the handheld electronic device of Figures 1 and 2 enables the user to input text using a stored macro according to one arrangement of the disclosed and claimed concept; and

Figure 6 shows an email message screen that is provided according to another aspect of the disclosed and claimed concept.

### DESCRIPTION

The disclosed and claimed concept provides a method of facilitating the input of text on a handheld electronic device that employs normal edit fields and one or more specialized edit fields. The method includes storing a user defined macro that is associated with a first specified edit field and identified by a first macro identifier, wherein the first specified edit field has one or more rules associated therewith for translating textual input into alternative text. The method further includes receiving a first indication, such as the entry of a predetermined delimiter character, that a macro is to be employed, receiving the first macro identifier, and responsive to receiving the first macro identifier, switching a current edit field of the current application of the handheld electronic device to the first specified edit field. Thereafter the method includes receiving first textual input, translating the first textual input into first alternative text based on the one or more rules of the first specified edit field, receiving a second indication, such as the entry of the predetermined delimiter character, that input using the first macro is complete, and responsive to receiving the second indication, switching the current edit field of the current application from the first specified edit field to a normal edit field. Preferably, the method further includes displaying the first alternative text and using the first alternative text in the current application.

The disclosed and claimed concept also provides a method of creating a macro for use in facilitating the input of text on a handheld electronic device employing normal edit fields and one or more specialized edit fields. The method includes receiving an identification of a particular one of the one or more specialized edit fields to be used in the macro, wherein the identified specialized edit field has one or more rules associated therewith for translating textual input into alternative text, receiving a macro identifier for the macron and storing the identified specialized edit field in association with the macro identifier. Thereafter, the macro when, active causes a current edit field of a current application of the handheld electronic device to be switched to the associated specialized edit field and causes textual input received by the handheld electronic device to be translated into alternative text based on the one or more rules of the specialized edit field.

The disclosed and claimed concept further provides a handheld electronic device that implements the methods just described.

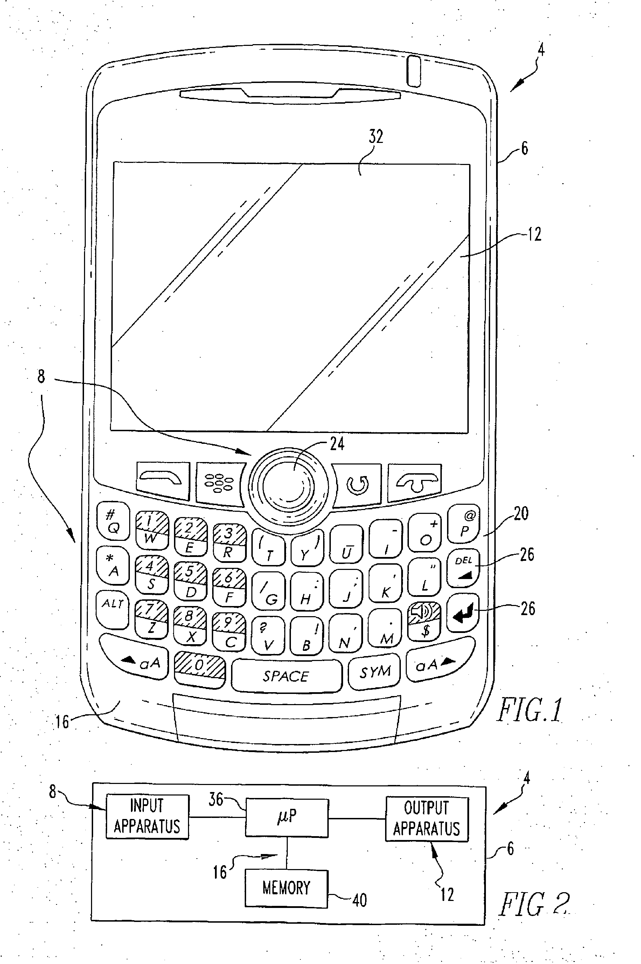

An improved handheld electronic device 4 in accordance with the disclosed and claimed concept is indicated generally in Figure 1 and is depicted schematically in Figure 2. The improved handheld electronic device 4 comprises a housing 6, and further comprises an input apparatus 8, an output apparatus 12, and a processor apparatus 16 disposed in the housing 6. The input apparatus 8 provides input to the processor apparatus 16. The processor apparatus 16 provides output signals to the output apparatus 12. As described elsewhere herein, the present example arrangement of the handheld electronic device 4 includes applications and/or routines resident thereon such as, for example, and without limitation, an e-mail and/or other messaging client (e.g., short message service (SMS), or multimedia messaging service (MMS)) a telephone application, a calendar application, a web browser application, a memo pad application, and an address book application, although other and/or additional applications and/or routines can be provided without departing from the disclosed and claimed concept.

The input apparatus 8 comprises a keyboard 20 and a trackball 24. The keyboard 20 in the exemplary arrangement depicted herein comprises a plurality of keys 26 that are each actuatable to provide input to the processor apparatus 16. The trackball 24 is rotatable to provide navigational and other input to the processor apparatus 16, and additionally is translatable in a direction inwardly toward the handheld electronic device 4 to provide other inputs, such as selection inputs. The trackball 24 is freely rotatable on the housing 6 and thus is able to provide navigational inputs in the vertical direction, i.e., the up-down direction, in the horizontal direction, i.e., the left-right (side to side) direction, as well as combinations thereof. In addition, the trackball 24 may be adapted to provide navigational inputs in diagonal directions. The keys 26 and the trackball 24 serve as input members which are actuatable to provide input to the processor apparatus 16. Alternative mechanisms for providing similar multi-directional navigation may be used in place of the trackball 24, such as, without limitation, a thumbwheel, a joystick, a touchpad, a touch-sensitive display, and hard buttons disposed on the housing 6 of the handheld electronic device 4. The exemplary output apparatus 12 comprises a display 32.

The characters of the exemplary keyboard 20 are in an arrangement of a QWERTY keyboard, although that should not be considered to be limiting. In the present example, the exemplary letters are Roman letters, and the exemplary Roman letters serve as linguistic elements for text input into the handheld electronic device 4. It is understood that while the linguistic elements of the instant example are depicted as being Roman letters, the linguistic elements could he other elements such as, for example and without limitation, ideograms, portions of ideograms such as strokes, and other elements that can be used in the generation of words in a language. It is noted that the expressions "text" and "word", and variations thereof, are to be broadly construed herein and are not intended to be limiting in any fashion with regard to a particular language, a particular portion of a language or a means of providing an expression in a language, or to a particular language type or format. Moreover, the expressions "text" or "word" are not limited to words in a vocabulary and also include names, nomenclatures, abbreviations, etc.

The processor apparatus 16 comprises a processor 36 and a memory 40. The processor 36 may be, for example and without limitation, a microprocessor (µP) that interfaces with the memory 40. The memory 40 can be any one or more of a variety of types of internal and/or external storage media such as, without limitation, RAM, ROM, EPROM(s), EEPROM(s), FLASH, and the like that provide a storage register, i.e., a machine readable medium, for data storage in a similar fashion to an internal memory storage of a computer, and can be volatile memory or nonvolatile memory. The memory 40 has stored therein a number of routines (which include the various applications described elsewhere herein) that are executable on the processor 36. As employed herein, the expression "a number of" and variations thereof shall refer broadly to any nonzero quantity, including a quantity of one. In addition, one or more of the routines implement the methods of the disclosed and claimed concept described elsewhere herein.

According to the disclosed and claimed concept, the handheld electronic device 4 enables a user to create system-level user defined macros to dynamically change the current input edit field, i.e., a normal edit field as described herein, to a particular specialized edit field, e.g., an edit field for entering an email address, a phone number, a URL or a date, among others, in order to improve typing efficiency when a user is typing in a situation that would otherwise employ a normal edit field. As used herein, the term "macro" shall mean a series of commands or instructions executable by the that are stored by the memory 40 and executable by the processor 36 and that are represented in an abbreviated format. In particular, a user is able to define macros such that when the user types a predetermined delimiter character using the appropriate key 26 of the keyboard 20, such as, without limitation, a "$" character, followed by a predefined macro identifier, such as a selected sequence of characters, the then current edit field type will be switched to the specialized edit field that is associated with the entered macro identifier until the delimiter character is again typed by the user. For example, and without limitation, a user may define macros that switch the then current edit field type to the following specialized edit fields: email address edit field (example macro identifier "ea"); phone number edit field (example macro identifier "pn"); date edit field (example macro identifier "date"); and URL edit field (example macro identifier "url"). The user may then more easily type email address, phone number, date and URL information by typing the following: $ea[email address]$; $pn[phone number]$; $date[date]$; and $url[url]$, wherein the bracketed information is typed according to the rules of the associated edit field (such rules indicating how certain inputs are to be interpreted, displayed and used in the current application). A "$" character may be a good choice for the delimiter because it has been found that with the keyboard 20 shown in Figure 1, the key 26 that includes the "$" character thereon is one of the more seldom used keys 26. As will be appreciated, other means for indicating that a macro is to be employed, such as pressing a predefined key or keys 26 in a particular manner (e.g., press and hold) may also be employed as an alternative to the entry of a certain delimiter character.

To illustrate the benefits of the disclosed concept, suppose a user wanted to type the following text when composing an email message or creating a memo pad note:
"Hello, my personal email address is example @ subdomain1.example.com and my personal phone number is 1234567. My website is http://www.example.com."
In the prior art, because a normal edit field would be employed in such a situation, the user would, using a keyboard like keyboard 20, have to type the following:

"Hello, my personal email address is example
ALT+Psubdomain1ALT+MexampleALT+Mcom and my personal phone number is ALT+WALT+EALT+RALT+SALT+DALT+FALT+Z. My website is httpALT+HALT+GALT+GwwwALT+MexampleALT+Mcom."
In contrast, with the above described macros, the user will only need to type the following using the keyboard 20 (with the ability to use two thumbs the whole time):
"Hello, my personal email address is
$eaexampleSPACEsubdomain1SPACEexampleSPACEcom$ and my personal phone number is $pnwerdfz$. My website is $urlexampleSPACEcom."
Note that after the user types each initial delimiter (e.g., "$") and macro identifier (e.g., "ea", "pn", "date", and "url"), the delimiter and macro identifier are no longer displayed on the display 12 of the handheld electronic device 4 and the edit field is automatically switched to the identified specialized edit field. In addition, once a user types each ending delimiter, it disappears from the display 12 and the edit field type that is being employed is automatically switched back to a normal edit field.

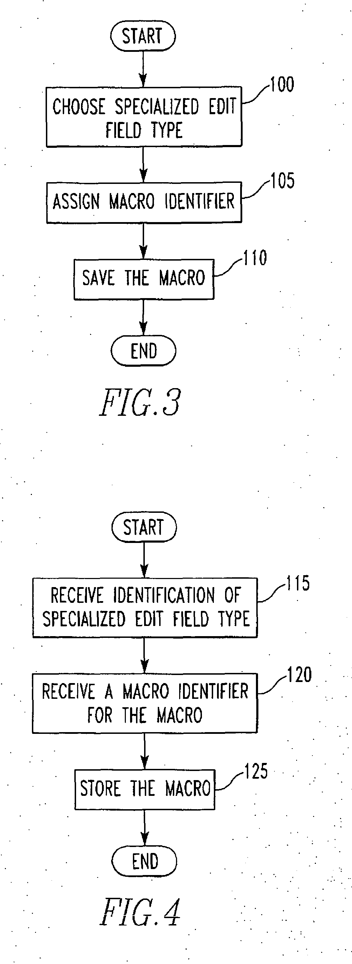

Figure 3 is a flowchart illustrating a method of creating a macro on the handheld electronic device 4 according to one arrangement of the disclosed and claimed concept. As will be appreciated, the method may be implement using the user interface of the handheld electronic device 4. In particular, a user may perform the method by being presented with certain information on the output apparatus 12, such as in the form of one or more menus and/or input screens provided on the display 32, and making certain selections and inputting certain information using the input apparatus 8. The method begins at step 100, wherein the user chooses the specialized edit field type (e.g., and without limitation, email address edit field, phone number edit field. date edit field, or URL edit field) for the macro being created. The user may do so by, for example, making a selection from a number of available edit field types listed in a selection menu provided on the display 12, or by inputting the information directly using the keyboard 20. Next, at step 105, once the specialized edit field type is chosen, the user assigns a macro identifier to the macro. As noted elsewhere herein, the macro identifier may be in the form of a string of one or more characters, preferably a string that will be easily remembered by the user. Then, at step 110, the user causes the macro to be saved in the memory 40, for example by choosing a "Save Macro" option form a menu provided on the display 32. Thereafter, the macro will be available for use by the user to input text as described elsewhere herein.

Figure 4 is a flowchart illustrating a method by which the handheld electronic device 4 enables the user to create a macro according to another arrangement of the disclosed and claimed concept which corresponds substantially to the user steps shown in Figure 3. The method begins at step 115, wherein the handheld electronic device 4, and in particular the processor apparatus 16 thereof, receives an identification of the particular specialized edit field type to be associated with the macro being generated. As discussed above, a user may provided this information by, for example, making a selection from a number of available edit field types listed in a selection menu provided by the handheld electronic device 4 on the display 12, or by inputting the information directly into the handheld electronic device 4 using the keyboard 20. Next, at step 120, the handheld electronic device 4, and in particular the processor apparatus 16 thereof, receives a macro identifier from the user for the macro being generated. Finally, in response to an input from the user, for example as described above, the handheld electronic device 4, at step 125, stores the specified macro in the memory 40 for later use by a user of the handheld electronic device 4.

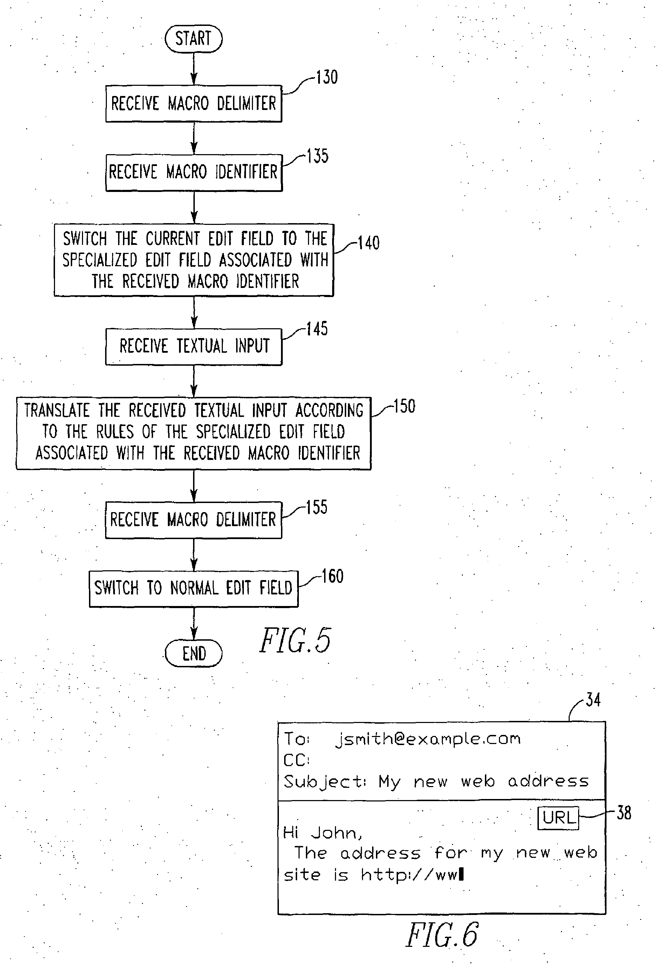

Figure 5 is a flowchart illustrating a method by which the handheld electronic device 4 enables the user to input text using a stored macro according to one arrangement of the disclosed concept in, for example, a situation where a normal edit field is being employed. The method begins at step 130, wherein the handheld electronic device 4, and in particular the processor apparatus 16 thereof, receives a predetermined macro delimiter (e.g., a "$") that is input by the user using the input apparatus 8. Next, at step 135, the handheld electronic device 4, and in particular the processor apparatus 16 thereof, receives a macro identifier (e.g., a "ea", "pn", "date", or "url") that is input by the user using the input apparatus 8 and that identifies a macro that has been stored in the memory 40 (step 110 of Figure 3 and step 125 of Figure 4). At step 140, in response to the input received at step 135, the processor apparatus 16 switches the current edit field (e.g., a normal edit field) to the specialized edit field that is identified by the received macro identifier. Then, at step 145, the handheld electronic device 4, and in particular the processor apparatus 16 thereof, receives textual input from the user as a result of the user's operation of the input apparatus 8. As used herein, the term "textual input" shall refer to any input in to the handheld electronic device 4 that results from the operation of the input apparatus 8, including, without limitation, the input of particular characters using the associated keys 26 and the input of spaces using the SPACE key 26. In step 150, the received textual input is translated by the processor apparatus 16 into alternative text according to the rules associated with the identified and currently activated specialized edit field. For example, if an email address specialized edit field as described elsewhere herein is identified by the received macro identifier and made active, then the following textual input: "name" SPACE "domain" SPACE "com", will be translated into the following alternative text: "name@domain.com", which alternative text is displayed on the display 32 and thereafter used by the active application (e.g., the email application in the body of an email message). In this case, the rules would indicate that the first SPACE key input gets translated into a "@" character and the second SPACE key input gets translated into a "." Character. At step 155, the predetermined macro delimiter (e.g., a "$") is received, indicating the end of user input employing the identified macro. Then, as step 160, the processor apparatus 16 switches the currently active edit field (i.e., the specialized edit field identified by the macro identifier in step 135) back to a normal edit field.

Thus, as demonstrated herein, the disclosed and claimed concept enables a user to define system level macros for dynamically changing a normal edit field in an application to a specified specialized edit field in order to improve typing efficiency.

In an alternative arrangement, the automatic switch to a particular specialized edit field can be based on the context of the textual information that is being typed. For example, if a user types "http", the handheld electronic device 4 could based thereon automatically determine that that a URL edit field should be employed, and automatically switch to such edit field. Thereafter, the user could simply type "exampleSPACEcom" and the handheld electronic device 4 will translate that into "http://www.example.com". As another example, if the user types "example@", the handheld electronic device 4 could based thereon automatically determine that that an email address edit field should be employed, and automatically switch to such edit field. Thereafter, the user could simply type

"SPACEsubdomain1SPACEexampleSPACEcom" and the handheld electronic device 4 will translate that into "example@subdomain1.example.com." As still another example, if the user types "07/", the handheld electronic device 4 could based thereon automatically determine that that a date edit field should be employed, and automatically switch to such edit field. Thereafter, the user could simply type "wrSPACEcc" and the handheld electronic device 4 will translate that into "07/13/99". Thus, according to an alternative arrangement of the disclosed and claimed concept, a method of facilitating the input of text on a handheld electronic device employing normal edit fields and one or more specialized edit fields is provided that includes receiving a first portion of a first textual input and choosing a particular one of the one or more specialized edit fields based on the first portion of the first textual input (i.e., based on context), wherein the particular one of the one or more specialized edit fields has one or more rules associated therewith for translating textual input into alternative text. The method further includes, responsive to choosing the particular specialized edit field, switching a current edit field of a current application of the handheld electronic device to the particular specialized edit field, receiving a second portion of the first textual input, translating the second portion of the first textual input into first alternative text based on the one or more rules, determining that textual input using the particular specialized edit field is complete, by, for example, determining that the user has input a space (e.g., two presses of the SPACE key), and responsive thereto switching the current edit field of the current application from the particular specialized edit field to a normal edit field.

According to a further aspect of the disclosed and claimed concept, following either step 140 in the arrangement of Figure 5 or the step of choosing a particular specialized edit field based on the first portion of the textual input in the context based arrangement just described, a visual indicator is provided to the user of the handheld electronic device 4 which indicates the particular specialized edit field that is current active. For example, Figure 6 shows an email message screen 34 that is provided on the display 32 when a user is composing an email message. In the example shown in Figure 6, the user is composing an email relating to a new web site, and thus the email message includes an URL. The screen 34 includes a edit field indicator 38 in the form of a text box that, in the example, indicates that the current edit field has been switched to a url specialized edit field, either as a result of the use of a macro as described herein or based on context as described herein. The edit field indicator 36 is helpful in that it reminds the user that the edit field type has been switched, and that the user should type accordingly. As will be appreciated, the particular edit field indicator 38 shown in Figure 6 is meant to be illustrative only, and that the edit field indicator 38 may take on a number of other forms without departing from the scope of the disclosed and claimed concept.

While preferred arrangements of the invention have been described and illustrated above, it should be understood that these are exemplary of the invention and are not to be considered as limiting. Additions, deletions, substitutions, and other modifications can be made without departing from the scope of the present invention. Accordingly, the invention is not to be considered as limited by the foregoing description but is only limited by the scope of the appended claims.

Further aspects of the disclosure are set out in the following clauses.
1. A method of facilitating the input of text on a handheld electronic device (4) employing normal edit fields and one or more specialized edit fields, comprising:
   storing a macro associated with a first specified edit field and identified by a first macro identifier, said first specified edit field having one or more rules associated therewith for translating textual input into alternative text;
   receiving a first indication that a macro is to be employed;
   receiving said first macro identifier;
   responsive to receiving said first macro identifier, switching a current edit field of a current application of said handheld electronic device to said first specified edit field;
   receiving first textual input;
   translating said first textual input into first alternative text based on said one or more rules;
   receiving a second indication that input using said first macro is complete; and
   responsive to receiving said second indication, switching the current edit field of the current application from said first specified edit field to a normal edit field.
2. The method according to clause 1, wherein said receiving a first indication that a macro is to be employed comprises receiving a first predetermined macro delimiter.
3. The method according to clause 2, wherein said receiving a second indication that input using said first macro is complete comprises receiving a second predetermined macro delimiter.
4. The method according to clause 3, wherein said first predetermined macro delimiter and said second predetermined macro delimiter are the same.
5. The method according to clause 4, wherein said first predetermined macro delimiter and said second predetermined macro delimiter each comprises one or more characters.
6. The method according to clause 5, wherein said one or more characters is a $ character
7. The method according to clause 1, further comprising displaying said first alternative text and using said first alternative text in said current application.
8. The method according to clause 1, wherein said first specialized edit field is selected from the group consisting of an email address edit field, a phone number edit field, a date edit field, and a URL edit field.
9. The method according to clause 1, further comprising, following said switching a current edit field of a current application of said handheld electronic device to said first specified edit field, providing a visual indicator (38) identifying said first specified edit field.
10. A handheld electronic device (4), comprising:
   an input apparatus (8);
   an output apparatus (12); and
   a processor apparatus (16) including a processor (36) and a memory (40) having stored therein one or more routines executable by the processor and a macro associated with a first specified edit field and identified by a first macro identifier, said first specified edit field having one or more rules associated therewith for translating textual input into alternative text, the one or more routines being adapted to:
      receive a first indication that a macro is to be employed;
      receive said first macro identifier;
      responsive to receiving said first macro identifier, switch a current edit field of a current application of said handheld electronic device to said first specified edit field;
      receive first textual input as a result of operation of said input apparatus;
      translate said first textual input into first alternative text based on said one or more rules;
      receive a second indication that input using said first macro is complete; and
      responsive to receiving said second indication, switch the current edit field of the current application from said first specified edit field to a normal edit field.
11. The handheld electronic device according to clause 10, wherein said one or more routines are adapted to receive a first indication that a macro is to be employed by receiving a first predetermined macro delimiter.
12. The handheld electronic device according to clause 11, wherein said one or more routines are adapted to receive a second indication that input using said first macro is complete by receiving a second predetermined macro delimiter.
13. The handheld electronic device according to clause 12, wherein said first predetermined macro delimiter and said second predetermined macro delimiter are the same.
14. The handheld electronic device according to clause 13, wherein said first predetermined macro delimiter and said second predetermined macro delimiter each comprises one or more characters.
15. The handheld electronic device according to clause 14, wherein said one or more characters is a $ character
16. The handheld electronic device according to clause 10, wherein said one or more routines are further adapted to display said first alternative text using said output apparatus and use said first alternative text in said current application.
17. The handheld electronic device according to clause 10, wherein said first specialized edit field is selected from the group consisting of an email address edit field, a phone number edit field, a date edit field, and a URL edit field.
18. The handheld electronic device according to clause 10, said one or more routines being further adapted to provide a visual indicator (38) identifying said first specified edit field after the current edit field of the current application is switched to said first specified edit field.
19. A method of facilitating the input of text on a handheld electronic device (4) employing normal edit fields and one or more specialized edit fields, comprising:
   receiving a first portion of a first textual input;
   choosing a particular one of said one or more specialized edit fields based on said first portion of said first textual input, said particular one of said one or more specialized edit fields having one or more rules associated therewith for translating textual input into alternative text;
   responsive to choosing the particular one of said one or more specialized edit fields, switching a current edit field of a current application of said handheld electronic device to said particular one of said one or more specialized edit fields;
   receiving a second portion of said first textual input;
   translating said second portion of said first textual input into first alternative text based on said one or more rules;
   determining that textual input using said particular one of said one or more specialized edit fields is complete; and
   responsive to said determining, switching the current edit field of the current application from said particular one of said one or more specialized edit fields to a normal edit field.
20. The method according to clause 19, further comprising, following said switching a current edit field of a current application of said handheld electronic device to said particular one of said one or more specialized edit fields, providing a visual indicator identifying said particular one of said one or more specialized edit fields.
21. A handheld electronic device (4) employing normal edit fields and one or more specialized edit fields, comprising:
   an input apparatus (8);
   an output apparatus (12); and
   a processor apparatus (16) including a processor (36) and a memory (40) having stored therein one or more routines executable by the processor, the one or more routines being adapted to facilitate the input of text on the handheld electronic device by:
      receiving a first portion of a first textual input;
      choosing a particular one of said one or more specialized edit fields based on said first portion of said first textual input, said particular one of said one or more specialized edit fields having one or more rules associated therewith for translating textual input into alternative text;
      responsive to choosing the particular one of said one or more specialized edit fields, switching a current edit field of a current application of said handheld electronic device to said particular one of said one or more specialized edit fields;
      receiving a second portion of said first textual input;
      translating said second portion of said first textual input into first alternative text based on said one or more rules;
      determining that textual input using said particular one of said one or more specialized edit fields is complete; and
      responsive to said determining, switching the current edit field of the current application from said particular one of said one or more specialized edit fields to a normal edit field.
22. The handheld electronic device according to clause 21, said one or more routines being further adapted to provide a visual indicator (38) identifying said particular one of said one or more specialized edit fields after the current edit field of the current application is switched to said particular one of said one or more specialized edit fields.

## Claims

1. A method of creating a macro for use in facilitating the input of text on a handheld electronic device (4) employing normal edit fields and one or more specialized edit fields, comprising:
receiving an identification of a particular one of said one or more specialized edit fields to be used in said macro, said particular one of said one or more specialized edit fields having one or more rules associated therewith for translating textual input into alternative text;
receiving a user-defined macro identifier for said macro, the user-defined identifier comprising a string input of one or more characters; and
associating the user-defined macro identifier with said particular one of said one or more specialized edit fields;
storing said macro;
wherein when the user-defined macro identifier is received with first textual input, said macro causes a current edit field of a current application of said handheld electronic device to be switched to said particular one of said one or more specialized edit fields and causes said first textual input to be translated into first alternative text based on said one or more rules.

2. The method according to claim 1, wherein said macro identifier comprises one or more characters.

3. The method according to claim 1, wherein said particular one of said one or more specialized edit fields is selected from the group consisting of an email address edit field, a phone number edit field, a date edit field, and a URL edit field.

4. A handheld electronic device (4) employing normal edit fields and one or more specialized edit fields, comprising:
an input apparatus (8);
an output apparatus (12); and
a processor apparatus (16) including a processor (36) and a memory (40) having stored therein one or more routines executable by the processor, the one or more routines being adapted to create a macro for use in facilitating the input of text on the handheld electronic device by:
receiving a user-defined macro identifier for said macro, the user-defined identifier comprising a string input of one or more characters; and
associating the user-defined macro identifier with said particular one of said one or more specialized edit fields;
storing said macro;
wherein when the user-defined macro identifier is received with first textual input, said macro causes a current edit field of a current application of said handheld electronic device to be switched to said particular one of said one or more specialized edit fields and causes said first textual input to be translated into first alternative text based on said one or more rules.

5. The handheld electronic device according to claim 4, wherein said macro identifier comprises one or more characters.

6. The handheld electronic device according to claim 4, wherein said particular one of said one or more specialized edit fields is selected from the group consisting of an email address edit field, a phone number edit field, a date edit field, and a URL edit field.

## Patentansprüche

1. Ein Verfahren zum Erzeugen eines Makros zur Verwendung bei einer Erleichterung der Eingabe von Text auf einer handgehaltenen elektronischen Vorrichtung (4) unter Verwendung normaler Editierfelder und eines oder mehrerer spezialisierter Editierfelder, wobei das Verfahren aufweist:
Empfangen einer Identifikation eines bestimmten des einen oder der mehreren spezialisierten Editierfelder zur Verwendung in dem Makro,
wobei das bestimmte des einen oder der mehreren spezialisierten Editierfelder eine oder mehrere Regeln damit assoziiert hat zum Umwandeln einer Texteingabe in einen alternativen Text;
Empfangen eines benutzerdefinierten Makro-Identifizierers für das Makro, wobei der benutzerdefinierte Identifizierer eine Zeichenkette-Eingabe aus einem oder mehreren Zeichen aufweist; und
Assoziieren des benutzerdefinierten Makro-Identifizierers mit dem bestimmten des einen oder der mehreren spezialisierten Editierfelder; Speichern des Makros;
wobei, wenn der benutzerdefinierte Makro-Identifizierer mit einer ersten Texteingabe empfangen wird, das Makro veranlasst, dass ein aktuelles Editierfeld einer aktuellen Anwendung der handgehaltenen elektronischen Vorrichtung zu dem bestimmten des einen oder der mehreren spezialisierten Editierfelder umgeschaltet wird, und veranlasst, dass die erste Texteingabe in einen ersten alternativen Text basierend auf der einen oder mehreren Regeln umgewandelt wird.

2. Das Verfahren gemäß Anspruch 1, wobei der Makro-Identifizierer ein oder mehrere Zeichen aufweist.

3. Das Verfahren gemäß Anspruch 1, wobei das bestimmte des einen oder der mehreren spezialisierten Editierfelder aus der Gruppe ausgewählt ist, die aus einem Email-Adresse-Editierfeld, einem Telefonnummer-Editierfeld, einem Datum-Editierfeld und einem URL-Editierfeld besteht.

4. Eine handgehaltene elektronische Vorrichtung (4), die normale Editierfelder und ein oder mehrere spezialisierte Editierfelder verwendet, die aufweist:
eine Eingabevorrichtung (8);
eine Ausgabevorrichtung (12); und
eine Prozessorvorrichtung (16) mit einem Prozessor (36) und einem Speicher (40), der eine oder mehrere Routine(n) darin gespeichert hat, die durch den Prozessor ausführbar ist/sind, wobei die eine oder mehreren Routine(n) ausgebildet ist/sind zum Erzeugen eines Makros zur Verwendung bei einer Erleichterung der Eingabe von Text auf der handgehaltenen elektronischen Vorrichtung durch:
Empfangen eines benutzerdefinierten Makro-Identifizierers für das Makro,
wobei der benutzerdefinierte Identifizierer eine Zeichenkette-Eingabe aus einem oder mehreren Zeichen aufweist; und
Assozüeren des benutzerdefinierten Makro-Identifizierers mit dem bestimmten des einen oder der mehreren spezialisierten Editierfelder; Speichern des Makros;
wobei, wenn der benutzerdefinierte Makro-Identifizierer mit einer ersten Texteingabe empfangen wird, das Makro veranlasst, dass ein aktuelles Editierfeld einer aktuellen Anwendung der handgehaltenen elektronischen Vorrichtung zu dem bestimmten des einen oder der mehreren spezialisierten Editierfelder umgeschaltet wird, und veranlasst, dass die erste Texteingabe in einen ersten alternativen Text basierend auf der einen oder mehreren Regeln umgewandelt wird.

5. Die handgehaltene elektronische Vorrichtung gemäß Anspruch 4, wobei der Makro-Identifizierer ein oder mehrere Zeichen aufweist.

6. Die handgehaltene elektronische Vorrichtung gemäß Anspruch 4, wobei das bestimmte des einen oder der mehreren spezialisierten Editierfelder aus der Gruppe ausgewählt ist, die aus einem Email-Adresse-Editierfeld, einem Telefonnummer-Editierfeld, einem Datum-Editierfeld und einem URL-Editierfeld besteht.

## Revendications

1. Procédé de création d'une macro à utiliser pour faciliter l'entrée de texte sur un dispositif électronique portatif (4) en utilisant des champs d'édition normaux et un ou plusieurs champs d'édition spécialisés, comprenant le fait de :
recevoir une identification d'un champ particulier desdits un ou plusieurs champs d'édition spécialisés à utiliser dans ladite macro, ledit champ particulier desdits un ou plusieurs champs d'édition spécialisés ayant une ou plusieurs règles qui lui sont associées pour traduire une entrée textuelle en texte de remplacement ;
recevoir un identificateur de macro défini par l'utilisateur pour ladite macro, l'identificateur de macro défini par l'utilisateur comprenant une entrée de chaîne d'un ou plusieurs caractères ; et
associer l'identificateur de macro défini par l'utilisateur audit champ particulier desdits un ou plusieurs champs d'édition spécialisés ;
mémoriser ladite macro ;
dans lequel, lorsque l'identificateur de macro défini par l'utilisateur est reçu avec une première entrée textuelle, ladite macro amène un champ d'édition actuel d'une application actuelle dudit dispositif électronique portatif à être commuté audit champ particulier desdits un ou plusieurs champs d'édition spécialisés et amène ladite première entrée textuelle à être traduite en premier texte de remplacement sur la base desdites une ou plusieurs règles.

2. Procédé selon la revendication 1, dans lequel ledit identificateur de macro comprend un ou plusieurs caractères.

3. Procédé selon la revendication 1, dans lequel ledit champ particulier desdits un ou plusieurs champs d'édition spécialisés est choisi dans le groupe constitué d'un champ d'édition d'une adresse de courrier électronique, d'un champ d'édition d'un numéro de téléphone, d'un champ d'édition d'une date et d'un champ d'édition d'une adresse URL.

4. Dispositif électronique portatif (4) utilisant des champs d'édition normaux et un ou plusieurs champs d'édition spécialisés, comprenant :
un appareil d'entrée (8) ;
un appareil de sortie (12) ; et
un appareil de processeur (16) comportant un processeur (36) et une mémoire (40) dans laquelle sont stockés un ou plusieurs sous-programmes exécutables par le processeur, lesdits un ou plusieurs sous-programmes étant adaptés pour créer une macro à utiliser pour faciliter l'entrée de texte sur le dispositif électronique portatif :
en recevant un identificateur de macro défini par l'utilisateur pour ladite macro, l'identificateur de macro défini par l'utilisateur comprenant une entrée de chaîne d'un ou plusieurs caractères ; et
en associant l'identificateur de macro défini par l'utilisateur audit champ particulier desdits un ou plusieurs champs d'édition spécialisés ;
en stockant ladite macro ;
dans lequel, lorsque l'identificateur de macro défini par l'utilisateur est reçu avec la première entrée textuelle, ladite macro amène un champ d'édition actuel d'une application actuelle dudit dispositif électronique portatif à être commuté audit champ particulier desdits un ou plusieurs champs d'édition spécialisés et amène ladite première entrée textuelle à être traduite en premier texte de remplacement sur la base desdites une ou plusieurs règles.

5. Dispositif électronique portatif selon la revendication 4, dans lequel ledit identificateur de macro comprend un ou plusieurs caractères.

6. Dispositif électronique portatif selon la revendication 4, dans lequel ledit champ particulier desdits un ou plusieurs champs d'édition spécialisés est choisi dans le groupe constitué d'un champ d'édition d'une adresse de courrier électronique, d'un champ d'édition d'un numéro de téléphone, d'un champ d'édition d'une date et d'un champ d'édition d'une adresse URL.
